# EUROPEAN PATENT SPECIFICATION

(11) **EP 1 582 728 B1**
(45) Date of publication and mention of the grant of the patent: **23.02.2011**
(21) Application number: 05006758.6
(22) Date of filing: 29.03.2005
(51) Int. Cl.: F02D 41/40, F02D 41/04, F02D 41/10

(54) **Fuel injection system of internal combustion engine**
Krafstoffeinspritzsystem einer Brennkraftmaschine
Système d'injection de fuel d'un moteur à explosion

(30) Priority: 29.03.2004 JP 2004095727
(43) Date of publication of application: 05.10.2005
(73) Proprietor: DENSO CORPORATION, Kariya-city, Aichi-pref. 448-8661 (JP)
(72) Inventor: Miyamoto, Kouji, Kariya-city, Aichi-pref., 448-8661 (JP); Sakai, Hiroshi, Kariya-city, Aichi-pref., 448-8661 (JP); Kadowaki, Chika, Kariya-city, Aichi-pref., 448-8661 (JP)
(74) Representative: TBK-Patent

(56) References cited:
- EP-A2- 1 134 395
- DE-A1- 10 114 039
- FR-A1- 2 807 470
- US-B1- 6 453 874

## Description

The present invention relates to a fuel injection system of a diesel engine mounted on a vehicle.

Conventionally, there is a publicly known fuel injection system, which performs multiple fuel injections in respective operation cycles of a diesel engine mounted on a vehicle. The fuel injection system performs a fuel injection referred to as a pilot injection before a fuel injection (a main injection) performed to generate a driving force of the engine. Thus, nitrogen oxides (NOx) contained in the exhaust gas are reduced and a combustion sound of the engine is reduced. The fuel injection system performs a post-injection after the main injection to combust particulate matters collected by an exhaust gas purification system disposed downstream of the engine. In some cases, the main injection, the pilot injection and the post-injection are performed in plural times respectively.

The conventional fuel injection system performs the multiple fuel injections in the respective operation cycles of the diesel engine to reduce the quantity of the nitrogen oxides contained in the exhaust gas or to reduce the combustion sound of the engine. Meanwhile, the particulate matters collected by the exhaust gas purification system are combusted. However, the conventional fuel injection system constantly performs the multiple fuel injections in the respective operation cycles of the diesel engine. Therefore, there is a possibility that a fuel consumption of the vehicle is significantly deteriorated if a load on the engine increases.

Document EP 1 134 395 A2 describes a fuel injection system as defined in the preamble of claim 1.

It is an object of the present invention to provide a fuel injection system capable of performing fuel injections, taking a fuel consumption of a vehicle into consideration.

This object is solved by a fuel injection system as set out in the independent claim 1.

Thus, the fuel injection system of the present invention is structured so that the injection controlling means prohibits the fuel injection, which is performed by the injecting means and does not contribute to the generation of the driving force of the engine, if the fuel consumption of the vehicle obtained by the obtaining means becomes greater than the assumed fuel consumption calculated by the calculating means. Accordingly, a total quantity of the fuel injected by the injecting means in the operation cycles of the engine reduces, and the fuel consumption is improved. Thus, even if a load on the diesel engine increases, significant deterioration of the fuel consumption of the vehicle can be prevented. As a result, the fuel injection taking the fuel consumption of the vehicle into consideration can be performed.

Advantageous developments are defined by the dependent claims.

Features and advantages of an embodiment will be appreciated, as well as methods of operation and the function of the related parts, from a study of the following detailed description, the appended claims, and the drawings, all of which form a part of this application. In the drawings:
Fig. 1 is a block diagram showing a structure of a fuel injection system according to an embodiment of the present invention;
Fig. 2 is a time chart showing fuel injections in operation cycles of an engine performed by the fuel injection system according to the embodiment;
Fig. 3 is a flowchart showing processing for setting and resetting a prohibition flag performed by the fuel injection system according to the embodiment;
Fig. 4 is a flowchart showing processing for calculating a load fuel consumption performed by the fuel injection system according to the embodiment;
Fig. 5 is a flowchart showing processing for calculating an acceleration-deceleration fuel consumption performed by the fuel injection system according to the embodiment;
Fig. 6 is a flowchart showing processing for calculating a load fuel consumption performed by a fuel injection system of a first modified example of the embodiment;
Fig. 7 is a flowchart showing processing for calculating an acceleration-deceleration fuel consumption performed by the fuel injection system of the first modified example; and
Fig. 8 is a flowchart showing processing for providing a warning performed by a fuel injection system of a second modified example of the embodiment.

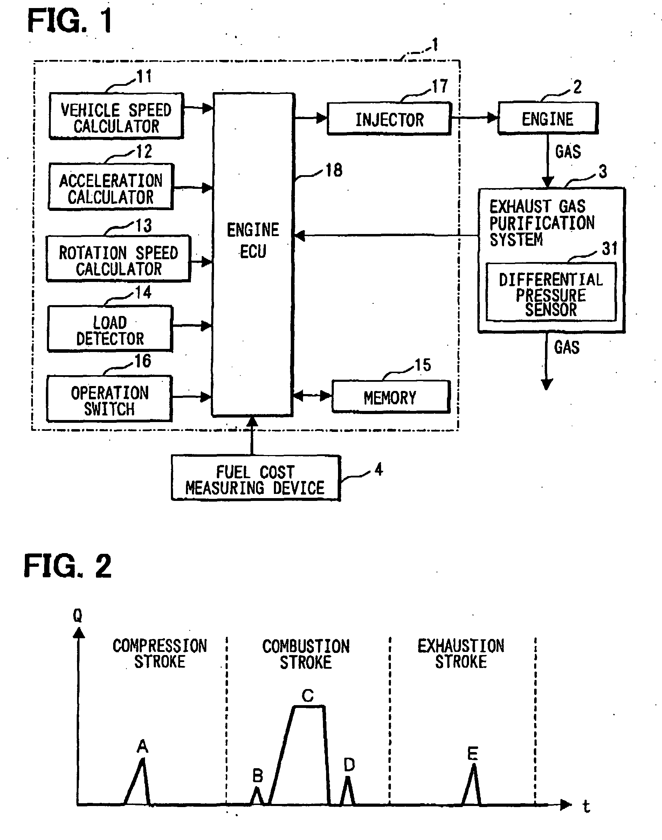

Referring to Fig. 1, a fuel injection system 1 according to an embodiment of the present invention is illustrated. The fuel injection system 1 of the present embodiment is applied to a fuel injection system of an engine 2, which is a diesel engine mounted on a vehicle. An exhaust gas purification system 3 is connected to a downstream portion of the engine 2. Exhaust gas discharged from the engine 2 is purified by the exhaust gas purification system 3 and discharged to an outside of the vehicle. The fuel injection system 1 of the present embodiment is also connected with a fuel consumption measuring device 4 measuring a fuel consumption of the vehicle.

As shown in Fig. 1, a vehicle speed calculator 11 includes a sensor for sensing rotation of a vehicular wheel, for instance. Thus, the vehicle speed calculator 11 calculates a traveling speed of the vehicle based on a rotation speed of the wheel. Alternatively, the traveling speed of the vehicle may be calculated based on a sensing result of an axle sensor and the like sensing rotation of an axle. Alternatively, a traveling distance of the vehicle per a predetermined time may be calculated from a position of the vehicle sensed by a position detector such as a GPS, and the traveling speed of the vehicle may be calculated based on the calculation result.

An acceleration calculator 12 is equipped with a variable capacity capacitor having a pole plate connected with a resilient member, for instance. Thus, the acceleration calculator 12 calculates an acceleration of the vehicle based on a change in a capacitance of the capacitor due to a change in a position of the pole plate accompanying extension and contraction of the resilient member at the time when the vehicle is accelerated or decelerated. Alternatively, the acceleration of the vehicle may be calculated by using a three dimension gyroscope or may be calculated based on the calculation result of the vehicle speed calculator 11.

A rotation speed calculator 13 has a sensor for sensing rotation of a crankshaft of the engine 2, for instance. The rotation speed calculator 13 calculates the rotation speed of the engine 2 in a predetermined period based on the sensing result of the sensor. Alternatively, the rotation speed of the engine 2 may be calculated based on a set position of a transmission, the rotation speed of the axle and the like.

A load detector 14 includes a pressure sensor disposed on a floor face of a loading platform of the vehicle, for instance. The load detector 14 outputs a load signal, which indicates whether a burden is loaded on the loading platform of the vehicle, in accordance with the sensing result of the pressure sensor. Alternatively, whether the burden is loaded on the loading platform or not may be detected by using an infrared sensor and the like.

A memory 15 is a non-volatile memory such as a flash memory. The memory 15 stores a fuel consumption parameter in the case where the burden is loaded on the loading platform and a fuel consumption parameter in the case where the burden is not loaded on the loading platform as a load database. The memory 15 stores fuel consumption parameters in the case where the vehicle is in an accelerating state, in a decelerating state and a constant-speed traveling state as a travel database. The respective databases may be stored in a hard disc, DVD-RAM or the like.

An operation switch 16 is a push-button switch, for instance. If the operation switch 16 is pushed, a compulsory injection signal is outputted. Alternatively, an operation key may be indicated on an on-vehicle display and a touch switch equipped with a touch panel for sensing that the operation key is pushed may be provided. The compulsory injection signal is outputted if the touch switch is touched.

The injector 17 is a fuel injection device employing a publicly known common rail type fuel injection system. If the injector 17 receives a fuel injection signal from an engine ECU (electronic control unit) 18, the injector 17 injects an injection quantity of the fuel, which is indicated by the fuel injection signal, into a combustion chamber of the engine 2. A jerk-type fuel injection system may be employed instead of the common rail type fuel injection system.

The engine ECU 18 is structured by a publicly known computer. The engine ECU 18 calculates the fuel injection quantity corresponding to a pressed degree of an accelerator. The engine ECU 18 generates the multiple fuel injection signals based on the calculated fuel injection quantity. Then, based on a sensor output of a rotational angle sensor, which senses a rotational angle of the crankshaft of the engine 2, the engine ECU 18 outputs the generated fuel injection signals to the injector 17 to control the operation of the engine 2.

More specifically, the engine ECU 18 generates three types of fuel injection signals (a pre-injection signal, a main injection signal and an after injection signal) based on the fuel injection quantity calculated in accordance with the pressed degree of the accelerator. The pre-injection signal, the main injection signal and the after injection signal are used to perform a pre-injection, a main injection and an after injection as fuel injections performed in a combustion stroke of the engine 2. If it is determined that the engine 2 enters the combustion stroke based on the sensor output of the rotational angle sensor, the engine ECU 18 outputs the pre-injection signal, the main injection signal and the after injection signal to the injector 17 in that order. Thus, the engine ECU 18 makes the injector 17 perform the pre-injection, the main injection and the after injection. The engine 2 of the present embodiment is the diesel engine. Therefore, the combustion occurs in the combustion chamber of the engine 2 and the driving force is generated in the crankshaft of the engine 2 immediately after the three types of fuel injections are performed. More specifically, the three types of fuel injections are fuel injections for generating the driving force of the engine 2.

In addition, the engine ECU 18 makes the injector 17 perform a pilot injection in a period immediately after the vehicle is started. More specifically, if it is determined that the engine 2 enters a compression stroke based on the sensor output of the rotational angle sensor, the engine ECU 18 outputs a pilot injection signal to the injector 17 to make the injector 17 perform the pilot injection. The pilot injection is performed to reduce the combustion sound, which is generated in the combustion stroke of the engine 2, and to reduce the quantity of the nitrogen oxides or the particulate matters contained in the exhaust gas discharged from the engine 2. The injection quantity of the pilot injection is constant irrespective of the pressed degree of the accelerator.

The engine ECU 18 makes the injector 17 perform a fuel injection referred to as a post-injection if the engine ECU 18 receives a PM (particulate matter) deposition signal from the exhaust gas purification system 3. More specifically, if it is determined that the engine 2 enters the exhaustion stroke based on the sensor output of the rotational angle sensor, the engine ECU 18 outputs a predetermined post-injection signal to the injector 17 to make the injector 17 perform the post-injection. The fuel injected in the post-injection is introduced into the exhaust gas purification system 3 together with the exhaust gas to combust the particulate matters collected by the exhaust gas purification system 3. A fuel injection quantity of the post-injection is constant irrespective of the pressed degree of the accelerator.

The pilot injection and the post-injection are the fuel injections, which do not generate the driving force of the engine 2. More specifically, the pilot injection and the post-injection do not contribute to the generation of the driving force of the engine 2. An example of the fuel injections performed in the respective operation cycles of the engine 2 is shown in Fig. 2. Signs Q, A, B, C, D and E in Fig. 2 indicate the fuel injection quantity, the pilot injection, the pre-injection, the main injection, the after injection and the post-injection, respectively.

The engine ECU 18 of the present embodiment includes a prohibition flag indicating whether the post-injection is prohibited or not. The prohibition flag is set at one when the post-injection is prohibited, and is reset to zero when the post-injection is permitted. When the prohibition flag is set at one, the engine ECU 18 outputs no post-injection signal so that the injector 17 does not perform the post-injection even if the engine ECU 18 receives the PM deposition signal from the exhaust gas purification system 3. The engine ECU 18 sets and resets the prohibition flag. The engine ECU 18 obtains the fuel consumption of the vehicle from the fuel consumption measuring device 4, which is an external device for measuring the fuel consumption of the vehicle, if it is determined that the engine 2 enters the exhaustion stroke based on the sensor output of the rotational angle sensor. In addition, the engine ECU 18 calculates an assumed fuel consumption of the vehicle based on the traveling state of the vehicle. If the obtained fuel consumption becomes greater than the assumed fuel consumption, the engine ECU 18 sets the prohibition flag at one. If the obtained fuel consumption becomes less than the assumed fuel consumption of the vehicle or if it is determined that the engine 2 enters an idling state based on the rotation speed of the engine 2 calculated by the rotation speed calculator 13, the engine ECU 18 resets the prohibition flag to zero. The engine ECU 18 resets the prohibition flag to zero also when the compulsory injection signal for compulsorily performing the post-injection is outputted from the operation switch 16.

The assumed fuel consumption of the vehicle is calculated as follows. First, the engine ECU 18 obtains the load signal outputted from the load detector 14 and reads a fuel consumption parameter, which is indicated by the load signal and corresponds to the existence or nonexistence of the burden loaded on the loading platform of the vehicle, from the load database stored in the memory 15. Then, the engine ECU 18 calculates a load fuel consumption by multiplying the read fuel consumption parameter by a predetermined constant. The load fuel consumption indicates a general fuel consumption of the vehicle corresponding the existence or the nonexistence of the loaded burden. Then, the engine ECU 18 reads a fuel consumption parameter corresponding to an acceleration-deceleration state (an accelerating state, a decelerating state or a constant-speed traveling state) of the vehicle from the travel database stored in the memory 15, based on the acceleration of the vehicle calculated by the acceleration calculator 2. Then, the engine ECU 18 multiplies the read fuel consumption parameter by a predetermined constant to calculate an acceleration-deceleration fuel consumption. The acceleration-deceleration fuel consumption indicates a general fuel consumption of the vehicle corresponding to the accelerating state, the decelerating state or the constant-speed traveling state. Then, the load fuel consumption is compared with the acceleration-deceleration fuel consumption. The greater (worse) fuel consumption is multiplied by a predetermined correction coefficient to calculate the assumed fuel consumption of the vehicle.

In the present embodiment, the post-injection is prohibited or permitted by setting or resetting the prohibition flag. Specifically, the post-injection is prohibited or permitted among the five types of fuel injections of the engine 2, because it is only necessary to perform the post-injection by the time when the quantity of the particulate matters collected by the exhaust gas purification system 3 exceeds a predetermined value. Even if the post-injection is prohibited temporarily, influence on the travel of the vehicle or the operation of the engine 2 is small.

The exhaust gas purification system 3 suctions the exhaust gas discharged from the engine 2 and makes the exhaust gas pass through an exhaust gas purification filter. Thus, the exhaust gas purification system 3 collects the particulate matters contained in the exhaust gas and purifies the exhaust gas. The purified exhaust gas is discharge to the outside of the vehicle. The particulate matters collected by the exhaust gas purification filter are combusted and eliminated by supplying fuel vapor of the engine 2 into the exhaust gas passing through the filter.

The exhaust gas purification system 3 further includes a differential pressure sensor 31 for sensing a differential pressure between a pressure of the exhaust gas, which has not passed yet through the exhaust gas purification filter, and a pressure of the exhaust gas, which has already passed through the exhaust gas purification filter. The exhaust gas purification system 3 outputs the PM deposition signal to the fuel injection system 1 if the differential pressure sensed by the differential pressure sensor 31 is greater than a predetermined differential pressure, or if the particulate matters greater than a predetermined quantity are collected in the exhaust gas purification filter.

The fuel consumption measuring device 4 includes a drawn quantity meter for measuring a quantity of the fuel drawn from a fuel tank of the vehicle and a distance meter for measuring a traveling distance of the vehicle. The fuel consumption measuring device 4 measures the fuel consumption of the vehicle in every predetermined time based on the measurement results of the meters. The fuel consumption measuring device 4 may be included in the fuel injection system 1. Alternatively, the engine ECU 18 may calculate the fuel consumption based on the outputs of the various sensors.

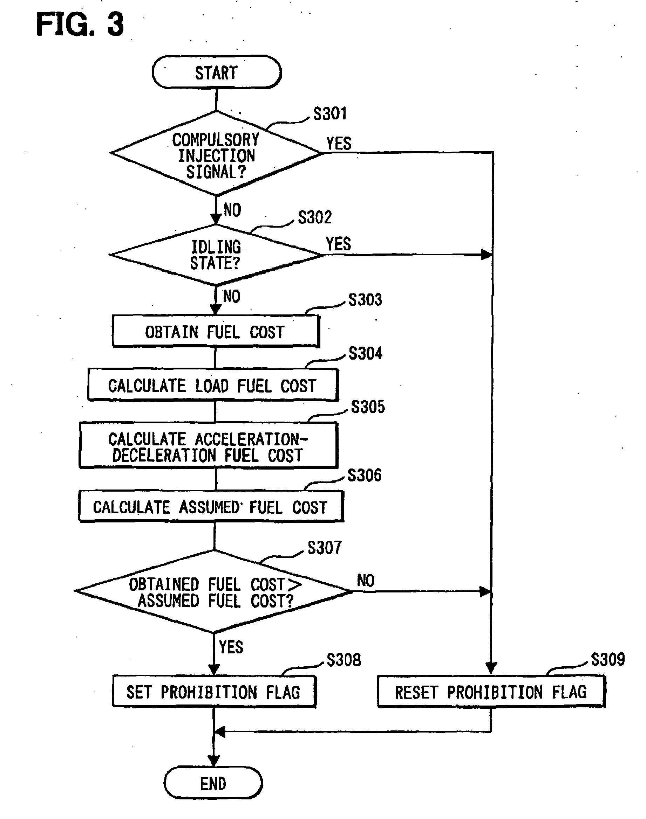

A flowchart of Fig. 3 shows processing for setting and resetting the prohibition flag performed by the fuel injection system 1 of the present embodiment. The processing of Fig. 3 is started if it is determined that the engine 2 enters the exhaustion stroke based on the sensor output of the rotational angle sensor.

In Step S301, the engine ECU 18 determines whether the compulsory injection signal is outputted by the operation switch 16 or not. It is because the post-injection needs to be permitted regardless of the fuel consumption of the vehicle if the compulsory injection signal is outputted. If the compulsory injection signal is outputted, the processing proceeds to Step S309. If the compulsory injection signal is not outputted, the processing proceeds to Step S302.

In Step S302, it is determined whether the engine 2 is in the idling state based on the rotation speed of the engine 2 calculated by the rotation speed calculator 13. It is because the vehicle is in a stopped state and the fuel consumption is not deteriorated significantly even if the post-injection is performed when the engine 2 is in the idling state. If it is determined that the engine 2 is in the idling state, the processing proceeds to Step S309. If it is determined that the engine 2 is not in the idling state, the processing proceeds to Step S303.

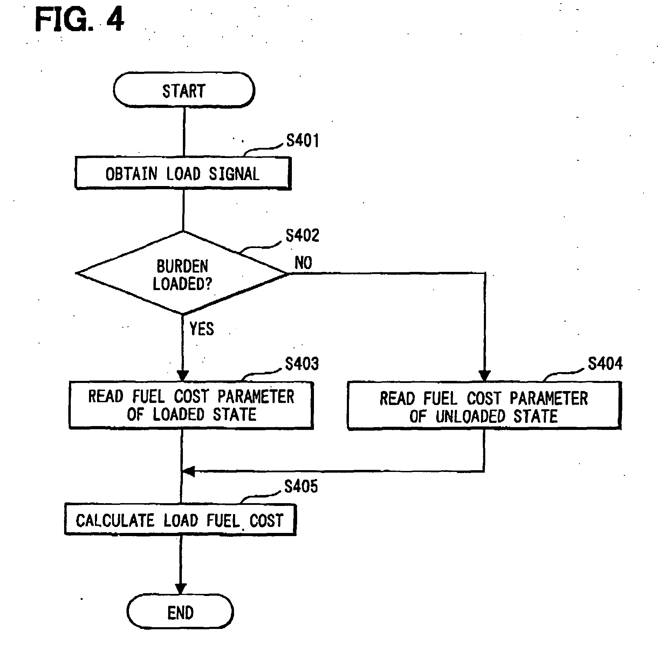

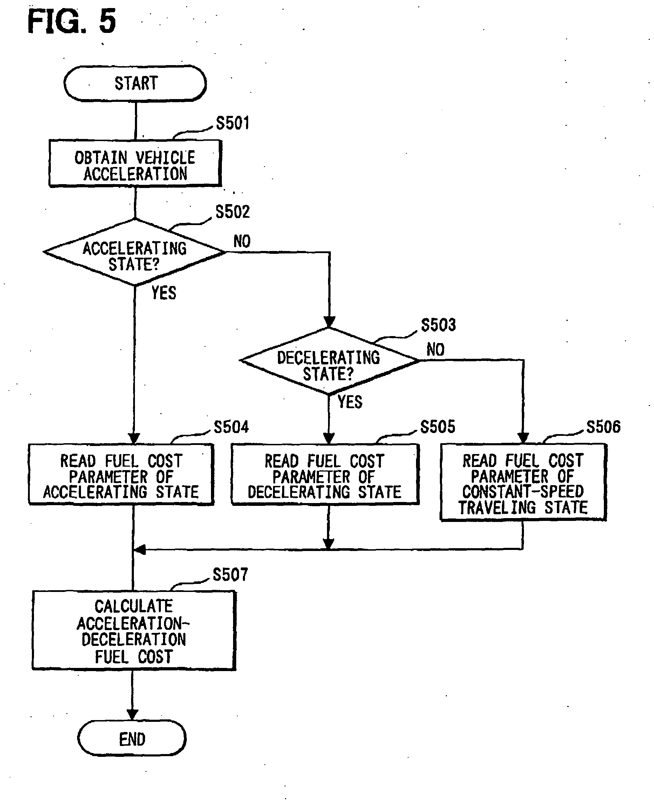

In Step S303, the fuel consumption of the vehicle measured by the fuel consumption measuring device 4 is obtained. In Step 5304, the load fuel consumption is calculated (as explained in detail based on Fig. 4, after). In Step S305, the acceleration-deceleration fuel consumption is calculated (as explained in detail based on Fig. 5, after).

In Step S306, the load fuel consumption calculated in Step S304 is compared with the acceleration-deceleration fuel consumption calculated in Step S305, and the greater value (the worse fuel consumption) between the load fuel consumption and the acceleration-deceleration fuel consumption is multiplied by a correction coefficient to calculate an assumed fuel consumption of the vehicle. Thus, the assumed fuel consumption of the vehicle can be calculated in consideration of both the acceleration-deceleration state of the vehicle and the loading condition of the burden onto the vehicle. By employing the greater value between the load fuel consumption and the acceleration-deceleration fuel consumption as the assumed fuel consumption of the vehicle, the post-injection can be prohibited only when the deterioration of the fuel consumption of the vehicle is significant.

In Step S307, it is determined whether the fuel consumption of the vehicle obtained in Step S303 is greater (worse) than the assumed fuel consumption calculated in Step S306. If the result of the determination in Step S307 is "YES", the processing proceeds to Step S308. If the result of the determination in Step S307 is "NO", the processing proceeds to Step S309.

In Step S308, the prohibition flag is set to one and the processing is ended. After that, the engine ECU 18 does not output the post-injection signal to the injector 17 so that the injector 17 does not perform the post-injection even if the engine ECU 18 receives the PM deposition signal from the exhaust gas purification system 3. In Step S309, the prohibition flag is reset to zero and the processing is ended. In this case, the engine ECU 18 outputs the post-injection signal to the injector 17 to make the injector 17 perform the post-injection if the engine ECU 18 receives the PM deposition signal from the exhaust gas purification system 3. Thus, the particulate matters collected by the exhaust gas purification filter of the exhaust gas purification system 3 are combusted and eliminated.

A flowchart of Fig. 4 shows processing for calculating the load fuel consumption performed by the fuel injection system 1 of the present embodiment. The processing of Fig. 4 corresponds to the processing of Step S304 of the flowchart of Fig. 3.

In Step S401, the engine ECU 18 obtains the load signal outputted from the load detector 14. In Step S402, it is determined whether a burden is loaded on the loading platform of the vehicle based on the load signal obtained in Step S401. If the result of the determination in Step S402 is "YES", the processing proceeds to Step S403. If the result of the determination in Step S402 is "NO", the processing proceeds to Step S404.

In Step S403, the fuel consumption parameter in the case where the burden is loaded on the loading platform of the vehicle (the fuel consumption parameter of the loaded state) is read from the load database stored in the memory 15, and the processing proceeds to Step S405. In Step S404, the fuel consumption parameter in the case where the burden is not loaded on the loading platform (the fuel consumption parameter of the unloaded state) is read, and the processing proceeds to Step S405.

In Step S405, the fuel consumption parameter read in Step S403 or Step S404 is multiplied by a predetermined constant to calculate the load fuel consumption, and the processing is ended.

A flowchart of Fig. 5 shows processing for calculating the acceleration-deceleration fuel consumption performed by the fuel injection system 1 of the present embodiment. The processing of Fig. 5 corresponds to the processing of Step S305 of the flowchart of Fig. 3.

In Step S501, the engine ECU 18 obtains the vehicle acceleration calculated by the acceleration calculator 12. In Step S502, it is determined whether the vehicle is in the accelerating state based on the acceleration obtained in Step S501. If the result of the determination in Step S502 is "YES", the processing proceeds to Step 5504. If the result of the determination in Step S502 is "NO", the processing proceeds to Step S503.

In Step S503, it is determined whether the vehicle is in the decelerating state based on the acceleration obtained in Step S501. If the result of the determination in Step S503 is "YES", the processing proceeds to Step S505. If the result of the determination in Step S503 is "NO", the processing proceeds to Step S506.

In Step S504, the fuel consumption parameter in the case where the vehicle is in the accelerating state (the fuel consumption parameter of the accelerating state) is read from the travel database stored in the memory 15, and the processing proceeds to Step S507. In Step S505, the fuel consumption parameter in the case where the vehicle is in the decelerating state (the fuel consumption parameter of the decelerating state) is read, and the processing proceeds to Step S507. In Step S506, the fuel consumption parameter in the case where the vehicle is in the constant-speed traveling state (the fuel consumption parameter of the constant-speed traveling state) is read from the travel database stored in the memory 15, and the processing proceeds to Step S507.

In Step S507, the fuel consumption parameter read in either one of Steps S504, S505 and S506 is multiplied by a predetermined constant to calculate the acceleration-deceleration fuel consumption, and the processing is ended.

Thus, in the fuel injection system 1 of the present embodiment, the prohibition flag indicating whether the post-injection is prohibited is provided in the engine ECU 18. If it is determined that the engine 2 enters the exhaustion stroke, the engine ECU 18 obtains the fuel consumption of the vehicle from the fuel consumption measuring device 4 and calculates the assumed fuel consumption of the vehicle. If the obtained fuel consumption is greater than the assumed fuel consumption, the engine ECU 18 sets the prohibition flag at one and prohibits the subsequent post-injections. Thus, the post-injection, which does not contribute to the generation of the driving force of the engine 2, is prohibited and the total quantity of the fuel injected from the injector 17 in the respective operation cycles of the engine 2 is reduced. Accordingly, the fuel consumption of the vehicle is improved. The fuel injection system 1 of the present embodiment can prevent the significant deterioration of the fuel consumption of the vehicle even if the load on the diesel engine increases. As a result, the fuel injection system 1 can perform the fuel injection, taking the fuel consumption of the vehicle into consideration.

### (First Modified Example)

Next, a fuel injection system of a first modified example of the above embodiment will be explained.

In the fuel injection system of the first modified example, respective load fuel consumptions, which should be calculated from the respective fuel consumption parameters, are stored in the load database of the memory 15, instead of the fuel consumption parameters in the case of the loaded state and the unloaded state. In addition, respective acceleration-deceleration fuel consumptions, which should be calculated from the respective fuel consumption parameters, are stored in the travel database of the memory 15, instead of the fuel consumption parameters in the case of the accelerating state, the decelerating state and the constant-speed traveling state of the vehicle.

The memory 15 of the first modified example stores the load fuel consumption in the case where the burden is loaded on the loading platform of the vehicle and the load fuel consumption in the case where the burden is not loaded on the loading platform of the vehicle as the load database. The memory 15 stores the acceleration-deceleration fuel consumptions in the case of the accelerating state, the decelerating state and the constant-speed traveling state of the vehicle as the travel database.

The engine ECU 18 of the first modified example calculates the assumed fuel consumption of the vehicle as follows. First, the load fuel consumption corresponding to the load signal outputted from the load detector 14 is read from the load database of the memory 15. Then, the acceleration-deceleration fuel consumption corresponding to the acceleration of the vehicle calculated by the acceleration calculator 2 is read from the travel database of the memory 15. Finally, the load fuel consumption is compared with the acceleration-deceleration fuel consumption, and the greater value (the worse fuel consumption) between the load fuel consumption and the acceleration-deceleration fuel consumption is multiplied by a predetermined correction coefficient to calculate the fuel consumption of the vehicle.

The other structure and operation are the same as the above embodiment.

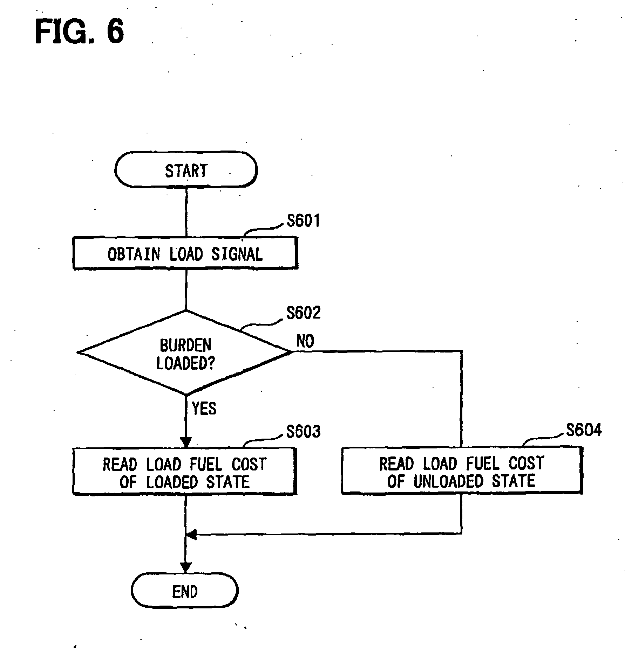

A flowchart of Fig. 6 shows processing for calculating the load fuel consumption performed by the fuel injection system of the first modified example. The processing shown by the flowchart of Fig. 6 is provided by deleting the processing in the flowchart of Fig. 4 for multiplying the read fuel consumption parameter by the predetermined constant to calculate the load fuel consumption and by replacing the fuel consumption parameter in the respective steps of the flowchart of Fig. 4 with the load fuel consumption.

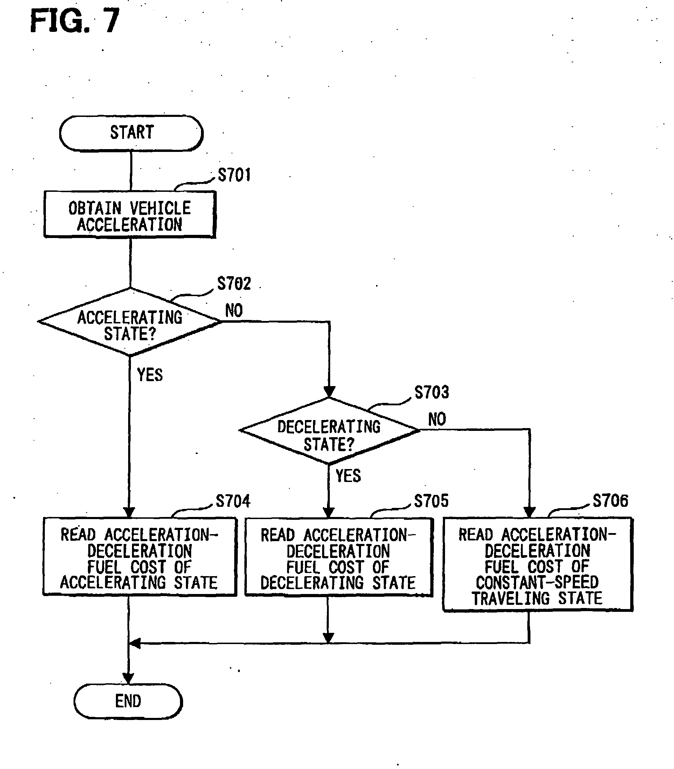

A flowchart of Fig. 7 shows processing for calculating the acceleration-deceleration fuel consumption performed by the fuel injection system of the first modified example. The processing shown by the flowchart of Fig. 7 is provided by deleting the processing in the flowchart of Fig. 5 for multiplying the read fuel consumption parameter by the predetermined constant to calculate the acceleration-deceleration fuel consumption and by replacing the fuel consumption parameter in the respective steps of the flowchart of Fig. 5 with the acceleration-deceleration fuel consumption.

Thus, the fuel injection system of the first modified example stores the load fuel consumptions in the case of the loaded state and the unloaded state in the load database of the memory 15. The respective acceleration-deceleration fuel consumptions in the case of the accelerating state, the decelerating state and the constant-speed traveling state of the vehicle are stored in the travel database of the memory 15. Thus, the engine ECU 18 only has to read the load fuel consumption and the acceleration-deceleration fuel consumption from the respective databases in the memory 15. Therefore, dedicated hardware and software for calculating the load fuel consumption and the acceleration-deceleration fuel consumption are unnecessary, which is desirable from the standpoints of design and cost.

### (Second Modified Example)

Next, a fuel injection system of a second modified example of the above embodiment will be explained. The fuel injection system of the second modified example warns a vehicle driver that the post-injection has not been performed for a predetermined time or longer if the state in which the prohibition flag is set continues for the predetermined time or longer, in addition to the functions of the above embodiment and the first modified example.

The engine ECU 18 of the second modified example starts an internal timer to start counting an elapsed time when the prohibition flag is set at one. Then, if the elapsed time indicated by the internal timer exceeds a predetermined time, the engine ECU 18 outputs a warning sound, which warns that the post-injection has not been performed for a predetermined time or longer, from a speaker. If the prohibition flag is reset to zero, the engine ECU 18 resets the internal timer and suspends the above operation.

The other structure and operation are the same as the above embodiment.

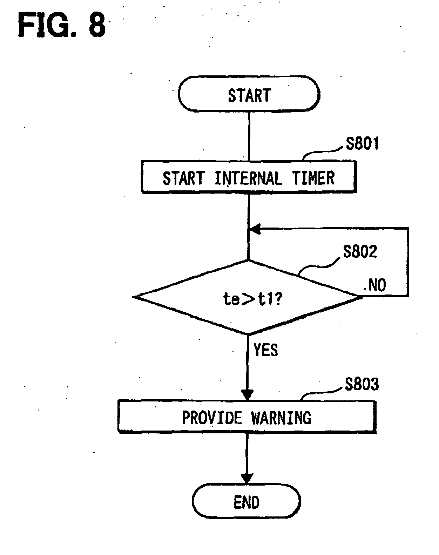

A flowchart of Fig. 8 shows processing performed by the fuel injection system of the second modified example for warning the driver that the post-injection has not been performed for a predetermined time or longer. The processing shown by the flowchart of Fig. 8 is performed every time the prohibition flag is set at one.

In Step S801, the engine ECU 18 starts the internal timer to start counting the elapsed time tₑ. In Step S802, it is determined whether the elapsed time tₑ indicated by the internal timer exceeds a predetermined time t1. If the result of the determination in Step S802 is "YES", the processing proceeds to Step S803. In Step S803, the warning sound for warning that the post-injection has not been performed for the predetermined time or longer is outputted from the speaker. If the result of the determination in Step S802 is "NO", the determination is repeated.

If the prohibition flag is reset while the processing shown by the flowchart of Fig. 8 is performed, the engine ECU 18 resets the internal timer and immediately stops the processing shown by the flowchart of Fig. 8.

Thus, the engine ECU 18 of the fuel injection system of the second modified example starts the internal timer to start counting the elapsed time when the prohibition flag is set at one. Then, if the elapsed time indicated by the internal timer exceeds the predetermined time, the warning sound for warning that the post-injection has not been performed for the predetermined time or longer is outputted from the speaker. For instance, a state in which the post-injection is prohibited can continue for a long time when the vehicle travels on an ascending slope for a long time. In such a case, the particulate matters collected by the exhaust gas purification system 3 cannot be combusted for a long time, which is undesirable. Therefore, in such a case, the warning sound for warning that the post-injection has not been performed for the predetermined time or longer is outputted from the speaker. Thus, the state in which the particulate matters collected by the exhaust gas purification system 3 have not been combusted for a long time can be known.

In the above embodiment and the modified examples, the post-injection performed by the injector 17 is prohibited if the prohibition flag is set at one. Alternatively, any kind of fuel injection may be prohibited if the fuel injection does not generate the driving force of the engine 2. For instance, the pilot injection may be prohibited in addition to the post-injection performed by the injector 17. Thus, the quantity of the nitrogen oxides contained in the exhaust gas increases and the combustion sound of the engine 2 increases but the significant deterioration of the fuel consumption of the vehicle can be prevented. Alternatively, either the post-injection or the pilot injection may be prohibited selectively.

In the above embodiment and the modified examples, the injector 17 of the engine 2 performs up to five types of fuel injections in the respective operation cycles. Alternatively, the injector 17 may perform more types of fuel injections. Alternatively, the injector 17 may perform fewer types of fuel injections. Alternatively, each type of fuel injection may be performed in multiple times.

In the above embodiment and the modified examples, the prohibition flag is set or reset based on the information outputted from the various devices such as the vehicle speed calculator and the fuel consumption measuring device. However, some of the above devices cannot operate immediately after the start of the vehicle due to initialization processing and the like. If such devices are mounted on the vehicle, the prohibition flag cannot be set or reset immediately after the start of the vehicle. Therefore, travel data indicating the traveling condition of the vehicle may be stored in the memory 15 while the vehicle travels, and the prohibition flag may be set and reset immediately after the start of the vehicle based on the travel data stored in the memory 15. Thus, based on the previous traveling condition, the prohibition flag can be set and reset immediately after the start of the vehicle. Alternatively, the prohibition flag may be set and reset based on the travel data in accordance with habits of the vehicle driver such as a habit of quickly accelerating the vehicle immediately after the start of the vehicle.

In the above embodiment and the modified examples, the engine ECU 18 calculates the assumed fuel consumption of the vehicle based on the acceleration-deceleration state of the vehicle and the loading condition of the burden onto the vehicle. In addition, the assumed fuel consumption of the vehicle may be calculated based on whether the vehicle is traveling on the ascending slope. Thus, the assumed fuel consumption reflecting the traveling state of the vehicle more correctly can be calculated.

The fuel injection system of the above embodiment and the modified examples is applied to the fuel injection system of the diesel engine mounted on the vehicle. The fuel injection system of the above embodiment and the modified examples can also be suitably applied to a fuel injection system of a diesel engine mounted on a train or an airplane. The fuel injection system of the above embodiment or the modified examples is most suitably applied to the fuel injection system of the diesel engine mounted on the vehicle.

The present invention should not be limited to the disclosed embodiment, but may be implemented in many other ways without departing from the scope of the invention, as defined by the appended claims.

An engine electronic control unit (engine ECU) (18) obtains a fuel consumption of a vehicle from a fuel consumption measuring device (4) and calculates an assumed fuel consumption of the vehicle if it is determined that an engine (2) enters an exhaustion stroke based on a sensor output of a rotational angle sensor. If the obtained fuel consumption is greater than the assumed fuel consumption, the engine ECU (18) prohibits a post-injection, which does not generate a driving force of the engine (2). Accordingly, a total quantity of the fuel injected from an injector (17) in operation cycles of the engine (2) is reduced. As a result, significant deterioration of the fuel consumption of the vehicle can be prevented. Thus, the fuel injection taking the fuel consumption of the vehicle into consideration can be performed.

## Claims

1. A fuel injection system (1) of a diesel engine (2) that is mounted on a vehicle and connected with a collecting device (3) for collecting particulate matters contained in exhaust gas of the engine (2), wherein the fuel injection system (1) includes injecting means (17) for performing at least one fuel injection for generating a driving force of the engine (2) and for performing at least one fuel injection, which does not contribute to the generation of the driving force of the engine (2), in respective operation cycles of the engine (2),
**characterized by**:
obtaining means (S303) for obtaining an actual fuel consumption of the vehicle that is actually supplied from the injecting means (17) to the engine (2);
calculating means (S304, S305, S306) for calculating an assumed fuel consumption of the vehicle from a traveling state of the vehicle, which includes an acceleration-deceleration state and a load state of a burden loaded on the vehicle;
injection controlling means (S308, S309) for prohibiting the fuel injection, which is performed by the injecting means (17) and does not contribute to the generation of the driving force of the engine (2), if the actual fuel consumption of the vehicle obtained by the obtaining means (S303) becomes greater than the assumed fuel consumption of the vehicle calculated by the calculating means (S304, S305, S306);
acceleration-deceleration determining means (S502, S503, S702, S703) for determining which one of an accelerating state, a decelerating state and a constant-speed traveling state is a present operating state of the vehicle, wherein
the calculating means (S304, S305, S306) calculates the assumed fuel consumption of the vehicle based on a result of the determination of the acceleration-deceleration determining means (S502, S503, S702, S703),
the calculating means (S304, S305, S306) calculates a predetermined accelerating state fuel consumption as the assumed fuel consumption of the vehicle if the acceleration-deceleration determining means (S502, S503, S702, S703) determines that the present operating state of the vehicle is the accelerating state,
the calculating means (S304, S305, S306) calculates a predetermined decelerating state fuel consumption as the assumed fuel consumption of the vehicle if the acceleration-deceleration determining means (S502, S503, S702, S703) determines that the present operating state of the vehicle is the decelerating state, and
the calculating means (S304, S305, S306) calculates a predetermined constant-speed traveling state fuel consumption as the assumed fuel consumption of the vehicle if the acceleration-deceleration determining means (S502, S503, S702, S703) determines that the present operating state of the vehicle is the constant-speed traveling state.

2. The fuel injection system (1) as in claim 1, further comprising:
load determining means (S402, S602) for determining whether a burden is loaded on the vehicle, wherein
the calculating means (S304, S305, S306) calculates the assumed fuel consumption of the vehicle based on a result of the determination of the load determining means (S402, S602).

3. The fuel injection system (1) as in claim 2, wherein
the calculating means (S304, S305, S306) calculates a predetermined loaded state fuel consumption as the assumed fuel consumption of the vehicle if the load determining means (S402, S602) determines that the burden is loaded on the vehicle, and
the calculating means (S304, S305, S306) calculates a predetermined unload state fuel consumption as the assumed fuel consumption of the vehicle if the load determining means (S402, S602) determines that the burden is not loaded on the vehicle.

4. The fuel injection system (1) as in claim 2, wherein
the calculating means (S304, S305, S306) calculates the assumed fuel consumption of the vehicle based on the result of the determination of the acceleration-deceleration determining means (S502, S503, S702, S703) and the result of the determination of the load determining means (S402, S602).

5. The fuel injection system (1) as in claim 4, wherein
the calculating means (S304, S305, S306) compares one of the accelerating state fuel consumption, the decelerating state fuel consumption and the constant-speed traveling state fuel consumption corresponding to the result of the determination of the acceleration-deceleration determining means (S502, S503, S702, S703) with one of the loaded state fuel consumption and the unloaded state fuel consumption corresponding to the result of the determination of the load determining means (S402, S602), and calculates the worse fuel consumption as the assumed fuel consumption of the vehicle.

6. The fuel injection system (1) as in any one of claims 1 to 5, wherein
the obtaining means (S303) obtains the actual fuel consumption of the vehicle from a fuel consumption measuring device (4) as an external device, the actual fuel consumption being measured by the fuel consumption measuring device (4).

7. The fuel injection system (1) as in any one of claims 1 to 5, further comprising:
a fuel consumption measuring means (4) for measuring the actual fuel consumption to be obtained by the obtaining means (S303).

8. The fuel injection system (1) as in any one of claims 1 to 5, wherein the fuel injection system is adapted to calculate the actual fuel consumption to be obtained by the obtaining means (S303).

9. The fuel injection system (1) as in any one of claims 1 to 6, further comprising:
storing means (15) for storing information concerning the travel of the vehicle, wherein
the injection controlling means (S308, S309) determines whether the prohibiting operation should be performed based on the information concerning the travel of the vehicle, which is stored in the storing means (15), when the vehicle is started.

10. The fuel injection system (1) as in any one of claims 1 to 9, wherein
the injection controlling means (S308, S309) permits the fuel injection, which is performed by the injecting means (17) and does not contribute to the generation of the driving force of the engine (2), if the operating state of the engine (2) becomes an idling state.

11. The fuel injection system (1) as in any one of claims 1 to 10, further comprising:
ordering means (16) for ordering the injection controlling means (S308, S309) to permit the fuel injection, which does not contribute to the generation of the driving force of the engine (2), wherein
the injection controlling means (S308, S309) permits the fuel injection, which is performed by the injecting means (17) and does not contribute to the generation of the driving force of the engine (2), if the injection controlling means (S308, S309) receives the order from the ordering means (16).

12. The fuel injection system (1) as in any one of claims 1 to 11, wherein
the injecting means (17) performs a post-injection for combusting the particulate matters collected by the collecting device (3) as the fuel injection, which does not contribute to the generation of the driving force of the engine (2).

13. The fuel injection system (1) as in claim 12, further comprising:
warning means (S803) for performing warning operation if a state, in which the injection controlling means (S308, S309) prohibits the fuel injection not contributing to the generation of the driving force of the engine (2), continues for a predetermined time or longer.

14. The fuel injection system (1) as in claim 1, wherein
the calculating means (S304, S305, S306) calculates the assumed fuel consumption of the vehicle based on whether the vehicle is traveling on an ascending slope.

## Patentansprüche

1. Kraftstoffeinspritzsystem (1) einer Dieselmaschine (2), die in einem Fahrzeug montiert ist und mit einer Sammelvorrichtung (3) zum Sammeln von in einem Abgas der Maschine (2) enthaltenen Partikeln verbunden ist, wobei das Kraftstoffeinspritzsystem (1) eine Einspritzeinrichtung (17) umfasst zum Durchführen von zumindest einer Kraftstoffeinspritzung zum Erzeugen einer Antriebskraft der Maschine (2), und zum Durchführen von zumindest einer Kraftstoffeinspritzung, welche nicht zu der Erzeugung der Antriebskraft der Maschine (2) beiträgt, in jeweiligen Betriebszyklen der Maschine (2),
**gekennzeichnet durch**
eine Erhaltungseinrichtung (S303) zum Erhalten eines tatsächlichen Kraftstoffverbrauchs des Fahrzeugs, der der Maschine (2) von der Einspritzeinrichtung (17) tatsächlich zugeführt ist;
eine Berechnungseinrichtung (S304, S305, S306) zum Berechnen eines vermuteten Kraftstoffverbrauchs des Fahrzeugs von einem Fahrzustand des Fahrzeugs, welcher einen Beschleunigungs-Verzögerungszustand und einen Ladungszustand einer auf das Fahrzeug geladenen Last umfasst;
eine Einspritzsteuereinrichtung (S308, S309) zum Verhindern der Kraftstoffeinspritzung, welche **durch** die Einspritzeinrichtung (17) durchgeführt wird und nicht zu der Erzeugung der Antriebskraft der Maschine (2) beiträgt, falls der **durch** die Erhaltungseinrichtung (S303) erhaltene tatsächliche Kraftstoffverbrauch des Fahrzeugs größer als der **durch** die Berechnungseinrichtung (S304, S305, S306) berechnete vermutete Kraftstoffverbrauch des Fahrzeugs wird;
eine Beschleunigungs-Verzögerungs-Bestimmungseinrichtung (S502, S503, S702, S703) zum Bestimmen, welcher eines Beschleunigungszustands, eines Verzögerungszustands und eines Konstante-Geschwindigkeit-Fortbewegungszustands ein gegenwärtiger Betriebszustand des Fahrzeugs ist, wobei
die Berechnungseinrichtung (S304, S305, S306) den vermuteten Kraftstoffverbrauch des Fahrzeugs basierend auf einem Ergebnis der Bestimmung der Beschleunigungs-Verzögerungs-Bestimmungseinrichtung (S502, S503, S702, S703) berechnet,
die Berechnungseinrichtung (S304, S305, S306) einen vorbestimmten Beschleunigungszustand-Kraftstoffverbrauch als den vermuteten Kraftstoffverbrauch des Fahrzeugs berechnet, falls die Beschleunigungs-Verzögerungs-Bestimmungseinrichtung (S502, S503, S702, S703) bestimmt, dass der gegenwärtige Betriebszustand des Fahrzeugs der Beschleunigungszustand ist,
die Berechnungseinrichtung (S304, S305, S306) einen vorbestimmten Verzögerungszustand-Kraftstoffverbrauch als den vermuteten Kraftstoffverbrauch des Fahrzeugs berechnet, falls die Beschleunigungs-Verzögerungs-Bestimmungseinrichtung (5502, S503, S702, S703) bestimmt, dass der gegenwärtige Betriebszustand des Fahrzeugs der Verzögerungszustand ist, und
die Berechnungseinrichtung (S304, S305, S306) einen vorbestimmten Konstante-Geschwindigkeit-Fortbewegungszustand-Kraftstoffverbrauch als den vermuteten Kraftstoffverbrauch des Fahrzeugs berechnet, falls die Beschleunigungs-Verzögerungs-Bestimmungseinrichtung (S502, S503, S702, S703) bestimmt, dass der gegenwärtige Betriebszustand des Fahrzeugs der Konstante-Geschwindigkeit-Fortbewegungszustand ist.

2. Kraftstoffeinspritzsystem (1) nach Anspruch 1, ferner aufweisend:
eine Ladungsbestimmungseinrichtung (S402, S602) zum Bestimmen, ob eine Last auf das Fahrzeug geladen ist, wobei
die Berechnungseinrichtung (S304, S305, S306) den vermuteten Kraftstoffverbrauch des Fahrzeugs basierend auf einem Ergebnis der Bestimmung der Ladungsbestimmungseinrichtung (S402, S602) berechnet.

3. Kraftstoffeinspritzsystem (1) nach Anspruch 2, wobei
die Berechnungseinrichtung (S304, S305, S306) einen vorbestimmten Geladener-Zustand-Kraftstoffverbrauch als den vermuteten Kraftstoffverbrauch des Fahrzeugs berechnet, falls die Ladungsbestimmungseinrichtung (S402, S602) bestimmt, dass die Last auf das Fahrzeug geladen ist, und
die Berechnungseinrichtung (S304, S305, S306) einen vorbestimmten Ungeladener-Zustand-Kraftstoffverbrauch als den vermuteten Kraftstoffverbrauch des Fahrzeugs berechnet, falls die Ladungsbestimmungseinrichtung (S402, S602) bestimmt, dass die Last nicht auf das Fahrzeug geladen ist.

4. Kraftstoffeinspritzsystem (1) nach Anspruch 2, wobei
die Berechnungseinrichtung (S304, S305, S306) den vermuteten Kraftstoffverbrauch des Fahrzeugs basierend auf dem Ergebnis der Bestimmung der Beschleunigungs-Verzögerungs-Bestimmungseinrichtung (S502, S503, S702, S703) und dem Ergebnis der Bestimmung der Ladungsbestimmungseinrichtung (S402, S602) berechnet.

5. Kraftstoffeinspritzsystem (1) nach Anspruch 4, wobei
die Berechnungseinrichtung (S304, S305, S306) den Beschleunigungszustand-Kraftstoffverbrauch, den Verzögerungszustand-Kraftstoffverbrauch oder den Konstante-Geschwindigkeit-Fortbewegungszustand-Kraftstoffverbrauch entsprechend dem Ergebnis der Bestimmung der Beschleunigungs-Verzögerungs-Bestimmungseinrichtung (S502, S503, S702, S703) mit dem Geladener-Zustand-Kraftstoffverbrauch oder dem Ungeladener-Zustand-Kraftstoffverbrauch entsprechend dem Ergebnis der Bestimmung der Ladungsbestimmungseinrichtung (S402, S602) vergleicht, und den schlechteren Kraftstoffverbrauch als den vermuteten Kraftstoffverbrauch des Fahrzeugs berechnet.

6. Kraftstoffeinspritzsystem (1) nach einem der Ansprüche 1 bis 5, wobei
die Erhaltungseinrichtung (S303) den tatsächlichen Kraftstoffverbrauch des Fahrzeugs von einer Kraftstoffverbrauchmessvorrichtung (4) als eine externe Vorrichtung erhält, wobei der tatsächliche Kraftstoffverbrauch durch die Kraftstoffverbrauchmessvorrichtung (4) gemessen ist.

7. Kraftstoffeinspritzsystem (1) nach einem der Ansprüche 1 bis 5, ferner aufweisend:
eine Kraftstoffverbrauchmesseinrichtung (4) zum Messen des durch die Erhaltungseinrichtung (S303) zu erhaltenen tatsächlichen Kraftstoffverbrauchs.

8. Kraftstoffeinspritzsystem (1) nach einem der Ansprüche 1 bis 5, wobei das Kraftstoffeinspritzsystem angepasst ist, um den durch die Erhaltungseinrichtung (S303) zu erhaltenen tatsächlichen Kraftstoffverbrauch zu berechnen.

9. Kraftstoffeinspritzsystem (1) nach einem der Ansprüche 1 bis 6, ferner aufweisend:
eine Speichereinrichtung (15) zum Speichern von Informationen bezüglich des Fortbewegens des Fahrzeugs, wobei
die Einspritzsteuereinrichtung (S308, S309) bestimmt, ob der Verhinderungsbetrieb durchgeführt werden soll, basierend auf den Informationen bezüglich des Fortbewegens des Fahrzeugs, welche in der Speichereinrichtung (15) gespeichert sind, wenn das Fahrzeug gestartet wird.

10. Kraftstoffeinspritzsystem (1) nach einem der Ansprüche 1 bis 9, wobei
die Einspritzsteuereinrichtung (S308, S309) die Kraftstoffeinspritzung zulässt, welche durch die Einspritzeinrichtung (17) durchgeführt wird und nicht zu der Erzeugung der Antriebskraft der Maschine (2) beiträgt, falls der Betriebszustand der Maschine (2) ein Leerlaufzustand wird.

11. Kraftstoffeinspritzsystem (1) nach einem der Ansprüche 1 bis 10, ferner aufweisend:
eine Aufforderungseinrichtung (16) zum Auffordern der Einspritzsteuereinrichtung (S308, S309), die Kraftstoffeinspritzung zuzulassen, welche nicht zu der Erzeugung der Antriebskraft der Maschine (2) beiträgt, wobei
die Einspritzsteuereinrichtung (S308, S309) die Kraftstoffeinspritzung zulässt, welche durch die Einspritzeinrichtung (17) durchgeführt wird und nicht zu der Erzeugung der Antriebskraft der Maschine (2) beiträgt, falls die Einspritzsteuereinrichtung (S308, S309) die Aufforderung von der Aufforderungseinrichtung (16) empfängt.

12. Kraftstoffeinspritzsystem (1) nach einem der Ansprüche 1 bis 11, wobei
die Einspritzeinrichtung (17) eine Nacheinspritzung zum Verbrennen der durch die Sammelvorrichtung (3) gesammelten Partikel als die Kraftstoffeinspritzung durchführt, welche nicht zu der Erzeugung der Antriebskraft der Maschine (2) beiträgt.

13. Kraftstoffeinspritzsystem (1) nach Anspruch 12, ferner aufweisend:
eine Warneinrichtung (S803) zum Durchführen eines Warnbetriebs, falls ein Zustand, in welchem die Einspritzsteuereinrichtung (S308, S309) die nicht zu der Erzeugung der Antriebskraft der Maschine (2) beitragende Kraftstoffeinspritzung verhindert, für eine vorbestimmte Zeit oder länger andauert.

14. Kraftstoffeinspritzsystem (1) nach Anspruch 1, wobei
die Berechnungseinrichtung (S304, S305, S306) den vermuteten Kraftstoffverbrauch des Fahrzeugs basierend darauf berechnet, ob sich das Fahrzeug auf einer aufsteigenden Neigung fortbewegt.

## Revendications

1. Système d'injection de carburant (1) d'un moteur diesel (2) qui est monté sur un véhicule et raccordé à un dispositif de collecte (3) pour collecter des matières particulaires contenues dans le gaz d'échappement du moteur (2), dans lequel le système d'injection de carburant (1) comprend un moyen d'injection (17) pour effectuer au moins une injection de carburant pour générer une force d'entraînement du moteur (2) et pour effectuer au moins une injection de carburant qui ne contribue pas à la génération de la force d'entraînement du moteur (2), dans des cycles respectifs de fonctionnement du moteur (2),
**caractérisé par** :
un moyen d'obtention (S303) pour obtenir une consommation réelle de carburant du véhicule qui est actuellement fourni du moyen d'injection (17) au moteur (2) ;
un moyen de calcul (S304, S305, S306) pour calculer une consommation supposée de carburant du véhicule dans un état de déplacement du véhicule, qui comprend un état d'accélération-décélération et un état de charge d'une charge chargée sur le véhicule ;
un moyen de contrôle d'injection (S308, S309) pour interdire l'injection de carburant, qui est effectuée par le moyen d'injection (17) et ne contribue pas à la génération de la force d'entraînement du moteur (2), si la consommation réelle de carburant du véhicule obtenue par le moyen d'obtention (S303) devient supérieure à la consommation supposée de carburant du véhicule calculée par le moyen de calcul (S304,S305,S306);
un moyen de détermination d'accélération-décélération (S502, S503, S702, S703) pour déterminer lequel d'un état d'accélération, d'un état de décélération et d'un état de déplacement à vitesse constante est un état de fonctionnement présent du véhicule,
dans lequel
le moyen de calcul (S304, S305, S306) calcule la consommation supposée de carburant du véhicule sur la base d'un résultat de la détermination du moyen de détermination d'accélération-décélération (S502, S503, S702, S703),
le moyen de calcul (S304, S305, S306) calcule une consommation de carburant d'état d'accélération prédéterminée en tant que consommation supposée de carburant du véhicule si le moyen de détermination d'accélération-décélération (S502, S503, S702, S703) détermine que l'état de fonctionnement présent du véhicule est l'état d'accélération,
le moyen de calcul (S304, S305, S306) calcule une consommation de carburant d'état de décélération prédéterminée en tant que consommation supposée de carburant du véhicule si le moyen de détermination d'accélération-décélération (S502, S503, S702, S703) détermine que l'état de fonctionnement présent du véhicule est l'état de décélération, et
le moyen de calcul (S304, S305, S306) calcule une consommation de carburant d'état de déplacement à vitesse constante prédéterminée en tant que consommation supposée de carburant du véhicule si le moyen de détermination d'accélération-décélération (S502, S503, S702, S703) détermine que l'état de fonctionnement présent du véhicule est l'état de déplacement à vitesse constante.

2. Système d'injection de carburant (1) selon la revendication 1, comprenant en outre :
un moyen de détermination de charge (S402, S602) pour déterminer si une charge est chargée sur le véhicule, dans lequel
le moyen de calcul (S304, S305, S306) calcule la consommation supposée de carburant du véhicule sur la base d'un résultat de la détermination du moyen de détermination de charge (S402, S602).

3. Système d'injection de carburant (1) selon la revendication 2, dans lequel le moyen de calcul (S304, S305, S306) calcule une consommation de carburant d'état chargé prédéterminée en tant que consommation supposée de carburant du véhicule si le moyen de détermination de charge (S402, S602) détermine que la charge est chargée sur le véhicule, et
le moyen de calcul (S304, S305, S306) calcule une consommation de carburant d'état déchargé prédéterminée en tant que consommation supposée de carburant du véhicule si le moyen de détermination de charge (S402, S602) détermine que la charge n'est pas chargée sur le véhicule.

4. Système d'injection de carburant (1) selon la revendication 2, dans lequel le moyen de calcul (S304, S305, S306) calcule la consommation supposée de carburant du véhicule sur la base du résultat de la détermination du moyen de détermination d'accélération-décélération (S502, S503, S702, S703) et le résultat de la détermination du moyen de détermination de charge (S402, S602).

5. Système d'injection de carburant (1) selon la revendication 4, dans lequel le moyen de calcul (S304, S305, S306) compare l'une de la consommation de carburant d'état d'accélération, la consommation de carburant d'état de décélération et la consommation de carburant d'état de déplacement à vitesse constante correspondant au résultat de la détermination du moyen de détermination d'accélération-décélération (S502, S503, S702, S703) à l'une de la consommation de carburant d'état chargé et la consommation de carburant d'état déchargé correspondant au résultat de la détermination du moyen de détermination de charge (S402, S602), et calcule la pire consommation de carburant en tant que consommation supposée de carburant du véhicule

6. Système d'injection de carburant (1) selon l'une quelconque des revendications 1 à 5, dans lequel
le moyen d'obtention (S303) obtient la consommation réelle de carburant du véhicule d'un dispositif de mesure de consommation de carburant (4) en tant que dispositif externe, la consommation réelle de carburant étant mesurée par le dispositif de mesure de consommation de carburant (4).

7. Système d'injection de carburant (1) selon l'une quelconque des revendications 1 à 5, comprenant en outre :
un moyen de mesure de consommation de carburant (4) pour mesurer la consommation réelle de carburant à obtenir par le moyen d'obtention (S303).

8. Système d'injection de carburant (1) selon l'une quelconque des revendications 1 à 5, dans lequel le système d'injection de carburant est apte à calculer la consommation réelle de carburant à obtenir par le moyen d'obtention (S303).

9. Système d'injection de carburant (1) selon l'une quelconque des revendications 1 à 6, comprenant en outre :
un moyen de stockage (15) pour stocker des informations concernant le déplacement du véhicule, dans lequel
le moyen de contrôle d'injection (S308, S309) détermine si l'opération d'interdiction doit être effectuée sur la base des informations concernant le déplacement du véhicule, qui sont stockées dans le moyen de stockage (15), lorsque le véhicule est démarré.

10. Système d'injection de carburant (1) selon l'une quelconque des revendications 1 à 9, dans lequel
le moyen de contrôle d'injection (S308, S309) permet l'injection de carburant, qui est effectuée par le moyen d'injection (17) et ne contribue pas à la génération de la force d'entraînement du moteur (2), si l'état de fonctionnement du moteur (2) devient un état de ralenti.

11. Système d'injection de carburant (1) selon l'une quelconque des revendications 1 à 10, comprenant en outre :
un moyen de commande (16) pour commander au moyen de contrôle d'injection (S308, S309) de permettre l'injection de carburant, qui ne contribue pas à la génération de la force d'entraînement du moteur (2), dans lequel le moyen de contrôle d'injection (S308, S309) permet l'injection de carburant, qui est effectuée par le moyen d'injection (17) et ne contribue pas à la génération de la force d'entraînement du moteur (2), si le moyen de contrôle d'injection (S308, S309) reçoit la commande du moyen de commande (16).

12. Système d'injection de carburant (1) selon l'une quelconque des revendications 1 à 11, dans lequel
le moyen d'injection (17) effectue une post-injection pour la combustion des matières particulaires collectées par le dispositif de collecte (3) en tant qu'injection de carburant, qui ne contribue pas à la génération de la force d'entraînement du moteur (2).

13. Système d'injection de carburant (1) selon la revendication 12, comprenant en outre :
un moyen d'avertissement (S803) pour effectuer une opération d'avertissement si un état dans lequel le moyen de contrôle d'injection (S308, S309) interdit l'injection de carburant ne contribuant à la génération de la force d'entraînement du moteur (2) continue pendant un temps prédéterminé ou plus longtemps.

14. Système d'injection de carburant (1) selon la revendication 1, dans lequel le moyen de calcul (S304, S305, S306) calcule la consommation supposée de carburant du véhicule selon que le véhicule se déplace en montée ou pas.
